# EUROPEAN PATENT SPECIFICATION

(11) **EP 0 961 161 B1**
(45) Date of publication and mention of the grant of the patent: **17.12.2003**
(21) Application number: 99109233.9
(22) Date of filing: 21.05.1999
(51) Int. Cl.: G03B 15/00, F16M 11/20

(54) **Modular system for supporting and illuminating objects in photography**
Modulares System zum Plazieren und Beleuchten von Objekten in der Photographie
Système modulaire pour poser et éclairer des objets en photographie

(30) Priority: 25.05.1998 DE 29809082 U; 20.04.1999 US 295011
(43) Date of publication of application: 01.12.1999
(73) Proprietor: Horowitz, Ross M., New York, N.Y. 10011-6501 (US)
(72) Inventor: Horowitz, Ross M., New York, N.Y. 10011-6501 (US)
(74) Representative: Patentanwälte Ruff, Wilhelm, Beier, Dauster & Partner

(56) References cited:
- EP-A- 0 286 040
- DE-A- 3 445 623
- US-A- 2 242 303
- US-A- 3 952 322
- US-A- 3 967 301
- US-A- 4 144 556
- US-A- 4 468 108
- US-A- 4 757 425

## Description

### BACKGROUND OF THE INVENTION

### 1. Field of the Invention

The invention pertains to a photography or imaging system with a basic frame and with several system components that can at least in part be assembled into at least one system unit and that are to be allocated to the basic frame, whereby the basic frame exhibits four vertical support columns that are rigidly connected to each other.

The task of the invention is to create a photography or imaging system of the type mentioned above that ensures multiple capabilities for utilization. The modular imaging system described herein is used in the imaging process between the sources of lumination and the imaging device. The system provides a large variety of surfaces, including different sizes and shapes, as well as different surface materials to support the object to be imaged, or photographed, and a large variety of background configurations. The modules of object supports and backgrounds are constructed and deployed in a manner which uniquely optimizes the possibility of independent control for positioning and lighting both the object and the background. The spatial arrangements of the object supports and the backgrounds are designed to work within the requirements of the imaging process, while being part of the same self-contained system. The modular imaging system facilitates working with a complex setup. The spatial arrangement of the basic frame and extension arms results in a configuration where objects that are part of complex setups may be easily accessed by a user, and where changes in the control of illumination may be easily accomplished without disturbing the setup.

This task is carried out by means of the fact that the support columns are provided at their upper end faces with connection profiles to receive additional system components having corresponding connection profiles, wherein the connection profiles of the support columns and of the additional system components are configured in such a way that the respective connection profiles of the support column and the additional system components are inserted one into the other coaxially to the longitudinal axis of the respective support column, and that at least one first extension arm, serving as an additional system component, is detachably connected to one of said connection profiles, said extension arm projecting essentially radially to a longitudinal axis of said associated support column. Because of the extension arm, of which there is at least one, it is possible to increase the size of the useful area of the photography system in a region above the basic frame, while still simultaneously retaining the advantage of a relatively small floor space for the photography system. This results in a space-saving solution that, as a result of the connection profiles, permits a replacement or a different assembly of various combinations of system components or system units. Preferably allocated to the connection profiles of the support columns are at least two extension arms, that form an enlarged support or carrying surface for corresponding system components or system units. The extension arm, of which there is at least one, exhibits a corresponding connection profile that can be detachably connected to the connection profile of the particular support column. In conjunction with that, the connection profiles can alternatively be configured as female or male profiles, which means, in particular, as sleeve-shaped or peg-shaped profiles, so they can be inserted one into the other axially. The solution according to the invention can be used for both studio photography and for taking photographs in other locations to which the needed units of the photography system must be transported. The photography system is particularly well-suited for a variety of structural variations, which the photographer selects on the basis of his specialized knowledge and depending on the nature of the object to be photographed, specifically, with or without background, with or without shadows, etc. When a background is used, the design of the system often allows independent placement of subject and background, as well as independent control of lighting of subject and background.

### 2. Discussion of the Prior Art

Such a photography system is known from a DIMIU photo table from the firm of Foba. The photo table exhibits a basic frame that is provided with four vertical support columns that are rigidly connected to each other by means of transverse beams that run between them. The four support columns exhibit different lengths on a pair-by-pair basis, and in the region of their upper ends are conically tapered and provided with screw pegs, by means of which extension tubes or holders for reflectors can be fixed to the basic frame.

Another photography system is known from U.S. patent 3,952,322. This photography system uses four support columns with several through holes rectangular to the longitudinal axes of each support column wherein horizontal supporting rods can be inserted which carry lighting means and camera means.

### SUMMARY OF THE INVENTION

In a development of the invention, the extension arm, of which there is at least one, is supported on the associated connection profile of the support column by means of a corresponding connection profile in such a way that it can swivel around the longitudinal axis of the support column. As a result, the position of the extension arm, of which there is at least one, can be changed at will depending on the desired carrying or support function.

In an additional development of the invention, all of the connection profiles of the support columns are placed at least approximately in a common horizontal plane. If these connection profiles are now provided with a total of four rotatable extension arms, an exceptionally wide variety of different carrying or support functions can be obtained for the extension arms, and thus for the basic frame. Each extension arm can carry its own individual system component. In the same way, however, all of the extension arms can be used to hold one common system component, in particular, a support frame or support panel.

In an additional development of the invention, each extension arm exhibits at its free end a connection profile that corresponds to connection profiles of the support columns and is used to hold or support additional system components or units. As a result, the utilization and combination possibilities of the photography system according to the invention are further increased. In conjunction with this, the extension arms can hold additional system components, either rotatable or fixed. If an extension arm holds an additional extension arm, it results in a scissor-arm or elbow-like articulated arrangement that can perform particularly helpful carrying and support functions within the overall concept.

In an additional development of the invention, each of the system components and/or system units is provided with at least one connection profile that corresponds to the connection profiles. This results in a plug-in system that can be easily assembled or disassembled, whereby the various plug-in connections can be additionally secured by means of fixing means if necessary.

In an additional development of the invention, one extension arm is connected to each support column, whereby all of the extension arms are rotatably supported in a common horizontal plane. This is an especially advantageous arrangement that allows for an exceptionally large support panel relative to the basic frame.

In an additional development of the invention, provided as a system component is at least one extension section that exhibits a connection profile on at least one end face. The extension sections can be alignable horizontally or vertically, which results in differing and multiple utilization and combination possibilities.

In an additional development of the invention, at least one horizontal support panel arrangement is provided, which is specifically designed as a board or shelf. The panel arrangement, of which there is at least one, forms one system component, whereby the panel arrangement can be made transparent, translucent or opaque.

In an additional development of the invention, at least one dimensionally stable, preferably vertically aligned screen arrangement is provided. It can be designed as a wall screen or as a reflector screen, whereby the screen can be made transparent, translucent or opaque. In conjunction with that, the screen arrangement can be designed with a panel-like shape or it can be in the form of a three-dimensional flat-shaped article. Especially well-suited in this case is a flat-shaped article that is made of Plexiglas and exhibits a curved form that is known per se.

In an additional development of the invention, a flexible screen arrangement is provided in the form of a flat-shaped article. This flat-shaped article can be put up three-dimensionally or flat.

In an additional development of the invention, for each panel arrangement, of which there is at least one, and/or each screen arrangement, of which there is at least one, a carrier device is provided that can be connected to the basic frame and/or the extension arm, of which there is at least one. Preferably, the carrier device exhibits profile strips and/or a frame and/or support arrangements that can be connected to the extension arms. If the carrier device exhibits several such system components, then the carrier device, either per se or together with a panel or screen arrangement, forms one system unit. It is preferable that the term system unit be viewed as a defined assembly of the photography system for a specific purpose.

To connect the profile strips, frame or the support arrangements of the carrier device with the extension arm, of which there is at least one, or the basic frame, they are directly provided with connection profiles that are matched to the corresponding connection profiles of the support columns and the extension arm, of which there is at least one. As an alternative and as additional system components, adapters can be provided that, first, hold the corresponding elements of the carrier device, and second, are provided with the connection profiles that are matched to the connection profiles of the basic frame or the extension arm.

In an additional development of the invention, a tent assembly is provided that can be connected to the basic frame and/or to the extension arm, of which there is at least one. Preferably, the tent assembly exhibits in a known way at least one opening for the positioning of a camera. The tent assembly forms a system unit for photographs of certain objects.

In an additional development of the invention, provided for a tent formation of the tent assembly are stretching means or support means that are fixed to the basic frame and/or the extension arms. The tent formation is designed to be flexible, whereby it can be produced either by means of an unstable or inherently stiff flat-shaped textile article (web) or else by means of an inherently stiff but flexible Plexiglas or plastic foil or a different flat-shaped article made from a plastic material.

In an additional development of the invention, provided as support means is a support ring or track that is supported on vertical holding arms and that supports an at least partially cylindrical tent formation that can be suspended. The tent formation also may be configured in a fully cylindrical tent formation about the support ring. This is an especially advantageous tent assembly that delimits a cubicle-like space in which the object to be photographed can be positioned. In an alternate embodiment, the suspended support ring tent assembly may be employed as a separate, free-standing unit.

In an additional development of the invention, the connection profiles of the support columns are provided with bearing arrangements for a common, rotatable horizontal platform, in conjunction with which driving means are allocated to the platform. Specifically, the platform can be mounted on rollers, whereby each of the connection profiles preferably exhibits pivot bearing functions.

In an additional development of the invention, the driving means are integrated in a support column. This is an especially space-saving configuration of the photography system. In an advantageous way, the driven version of the photography system is well-suited for an especially ruggedly designed basic frame that includes correspondingly rugged system components that can accept a heavy load.

In an additional development of the invention, the driving means are allocated to an electric or electronic controlling means, where the transmission lines and driving means are at least partially integrated into the basic frame. As a result of the provision of a suitable controlling means, an automated and high precision adaptation to the particular requirements and functions can be achieved.

Additional advantages and features of the invention are provided by the claims. In the following, preferred embodiments of the invention are described and shown with the aid of the drawings.

### BRIEF DESCRIPTION OF THE DRAWINGS

The construction designed to carry out the invention will be hereinafter described, together with other features thereof.

The invention will be more readily understood from a reading of the following specification and by reference to the accompanying drawings forming a part thereof, wherein an example of the invention is shown and wherein:
Fig. 1 shows a shooting table according to a first form of execution of a photography system in accordance with the invention;
Figure 2 shows an extension section that can be adjusted for length and serves as a system component;
Figure 3 illustrates various system components of a photography system in accordance with the invention in an exploded view;
Figure 4 illustrates, in a schematic top view, an assembly of the photography system having at least one narrow shelf positioned adjacent a screen attached to extension arms in accordance with the invention;
Figure 5 illustrates, in an additional schematic top view, an additional assembly of the photography system with a basic frame and a large support panel adjacent a screen that is supported by extension arms; Figure 6 shows another schematic top view of an additional assembly of the photography system in accordance with the invention;
Figure 7 shows a schematic top view of an additional assembly of the photography system in accordance with the invention;
Figure 8 illustrates a schematic top view of an additional assembly of the photography system in accordance with the invention in which different versions are shown;
Figure 9 shows, in an enlarged schematic representation, the mounting of a vertical screen arrangement as shown in Figure 8;
Figure 10 illustrates, in schematic form, an additional screen arrangement in the form of a flexible, rolled up flat-shaped article;
Figure 11 shows, in a schematic top view, the mounting of a panel-like wall screen;
Figure 12 illustrates, in a schematic top view, an additional form of execution of a foil-like screen arrangement that is stretched between two U-shaped sections;
Figure 13 shows a schematic exploded view of a transverse connection between two extension arms, each of which is provided with an extension section, whereby the transverse connection is also adjustable for length;
Figure 14a illustrates, in an enlarged perspective representation, one embodiment of a carrier device, which can be swivelled around a vertical axis, for a panel-like, vertically aligned screen arrangement;
Figure 14b illustrates an additional embodiment of a carrier device for a panel-like screen arrangement that can be aligned in various positions in space;
Figure 15 shows a perspective view of an additional assembly of the photography system for object photography in accordance with the invention;
Figure 16 illustrates a schematic top view of an additional assembly of a photography system similar to Figure 15;
Figure 17 depicts, in a schematic top view, an additional assembly of a photography system similar to Figures 15 and 16;
Figure 18 shows, in a perspective representation, an additional assembly of a photography system in accordance with the invention, with a horizontal support frame;
Figure 19 illustrates a perspective representation of an additional assembly of a photography system in accordance with the invention that is similar to Figure 18, but with a vertical frame extension in which there is positioned a curved dimensionally stable surface material formation;
Figure 20 shows a perspective representation of an additional assembly of a photography system in accordance with the invention that is provided with a specially curved and configured Plexiglas flat-shaped article and with a correspondingly curved support frame;
Figure 21 illustrates, in a perspective representation, an additional assembly of a photography system in accordance with the invention with a displaceable support rod for attaching a flexible flat-shaped article in such a way that it can be rolled up and unrolled, or so that the flat-shaped article may simply be directly attached to the support rod;
Figure 22 shows, in a schematic top view, an additional form of execution of an assembly for a photography system in accordance with the invention;
Figure 23 depicts a perspective representation of a tent assembly from one form of execution of a photography system in accordance with the invention;
Figure 23A illustrates a perspective view of the configuration shown in Figure 23, and also includes a curtain member hanging from the support ring;
Figure 23B illustrates a perspective view of the configuration shown in Figure 23A, further including a second curtain member disposed about an outer periphery of the first curtain member;
Figure 24 shows a schematic top view of a number of variation options for a tent assembly per Figure 23;
Figure 25 depicts a schematic top view of an additional arrangement for a flexible tent assembly;
Figure 26 illustrates a schematic top view of an additional tent assembly that is similar to Figure 25, but in essence rigid;
Figure 27 shows a schematic top view of an additional form of execution of a tent assembly similar to Figure 26, with an asymmetrical form that can be changed into a symmetrical form;
Figure 28 depicts, in a perspective representation, a tunnel-like tent assembly in accordance with one form of execution of a photography system in accordance with the invention; Figure 29 shows in enlarged detail a support rail for the tunnel-like tent assembly per Figure 28;
Figure 30 illustrates, in a perspective representation, a photography system similar to Figure 28;
Figure 31 shows an additional tunnel-like tent assembly similar to Figures 28 and 30, here shown without the base;
Figure 32 depicts a top view of a corresponding support device for the tent assembly per Figures 28 and 30;
Figure 33 shows a side view of a preferred support rail similar to Figure 29;
Figure 34 depicts a representation of a rear end closure for a tunnel-like tent assembly per Figures 28 through 32;
Figure 35 shows a representation of a front end closure for a tunnel-like tent assembly per Figures 28 through 32, with a camera opening;
Figure 36 illustrates a perspective representation of a basic frame that is designed for a heavy load and whose support columns are provided with driving means which are capable of precise and repeatable motions;
Figure 37 depicts, in a schematic top view, a form of execution of a photography system in accordance with the invention, with a basic frame similar to Figure 36 on which a rotatable platform is supported; and
Figure 38 illustrates an additional assembly similar to Figure 37, in which a drive unit at a distance from the support columns is connected by means of a traction mechanism drive with four drive wheels mounted in the support columns for the rotation of the platform.

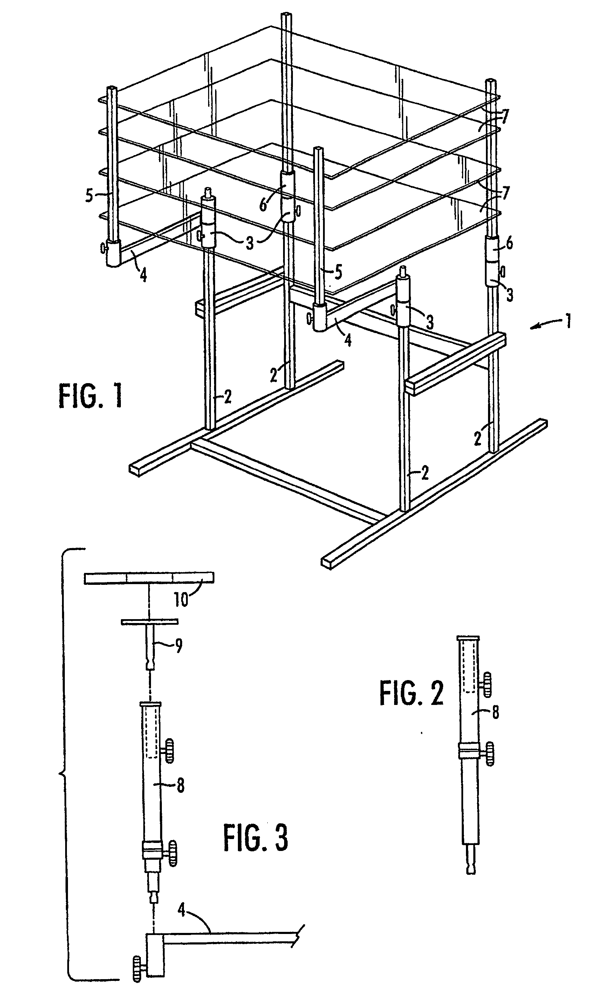

In the following, different versions of an imaging or photography system in accordance with the invention will be described with the aid of Figures 1 through 35, whereby only a selection of suitable system components and system units are cited only in limited combinations. Various assemblies for defined object photography are described in detail, but without the photography system being limited to the those assemblies which are described. Depending on the demands being made and the functions being required of the photography system, the system components and units that are shown can also be assembled in different combinations and arrangements. In the same way, the system components and units that are shown can also be combined with other components and units that are not shown and that appear to the professional to be suitable for the particular assembly on the basis of his professional knowledge and experience. In addition, it should be noted that the representations per Figures 1 through 35 are limited to the carrying and support functions of the photography system. However, it is obvious to the professional that the photography system is to be supplemented by lighting elements and light control devices that are known in the art, by imaging cameras and by background arrangements, and of course, by the objects to be photographed. The forms of execution that are shown thus represent only selected examples of combinations of the photography system, in order to simultaneously place into the hands of the professional an appropriate guideline for the required combination of system components that are shown with system components and photographic equipment that are not shown, depending on the scope of the requirements.

### DESCRIPTION OF THE PREFERRED EMBODIMENT

A shooting table for a photography system in accordance with the invention shown in Figure 1 exhibits a basic frame 1 that is provided with four support columns 2. The vertical support columns 2 are rigidly connected to each other by several adjustably positionable transverse beams, both in the base region as well as in segments lying further upward, to make the basic frame 1. The upper end faces of the support columns 2 are provided with connection profiles 3 in the form of sleeve-like seats. Depending on the intended use, the connection profiles can be provided with a round or a rectangular cross section, or any suitable cross sectional shape, but they are round in shape in the embodiment per Figure 1. Connection profiles are used to attach and carry various system components. Inserted into the connection profiles 3 of the support column 2 are peg-shaped connection profiles of, first, two extension arms 4, and second, two spacer sleeves 6. The spacer sleeves 6 are held in place in the seats 3. Holding sections 5 are carried at an upper end of the spacer sleeves 6, and may serve as system components. Both the sleeve-shaped and the peg-shaped connection profiles are configured cylindrically so the corresponding connection profiles can be turned with respect to each other. The extension arms 4 project radially to the longitudinal axis of the associated support columns 2, and thus horizontally to the side, and exhibit in the region of their free ends vertical, upward-projecting, sleeve-shaped connection profiles into which the corresponding holding sections 5 are inserted. In addition, each of the sleeve-shaped connection profiles of the two extension arms 4 is allocated a fixing means in the form of a fixing screw that can be screwed in radially and that fix the holding sections 5 in place in the connection profiles of the extension arms 4. Inserted in the connection profiles 3 of the two support columns 2 that are opposite each other are spacer sleeves 6, to which are attached holding sections 5 or other differently configured holding seats for the support of a total of four shelves 7 of the shooting tables, which are positioned one over the other. The holding sections 5 may be used to support one or more shelves 7. The base area of the shelves 7 projects beyond the base surface of the basic frame 1, which results in a space-saving floor arrangement for the shooting table. Further, by attaching two additional extension arms (not shown) opposite the two extension arms that are shown, and removing the spacer sleeves 6, the shelving 7 can be configured to be more oblong rather than square.

The extension arms 4, like the connection profiles 3 and the upper end faces of the support columns 2 do not have to be made cylindrical, they can also be given polygonal shapes. In this case, when the corresponding connection profiles are inserted, they cannot be rotationally adjusted relative to each other. In order to allow a different positioning in the same horizontal plane, each extension arm 4 must be withdrawn from the connection profile 3, and thus from the support column 2, and inserted again in the corresponding displaced state.

Figure 2 shows a length-adjustable, vertically aligned extension section 8 that has a telescopic design. Each extension section 8 is provided with locking means, such as fixing screws, which serve to lock the telescopic configuration into a fixed position. Extension section 8 also serves as a system component.

Figure 3 shows the extension section 8 used in conjunction with an extension arm and a small object support board 10. The particular length position that has been set can be secured by means of corresponding fixing screws. The extension section 8 exhibits a peg-shaped connection profile in the region of its lower end face, and a connection profile in the form of a sleeve-like seat in the region of its upper end face. A seating disk 9, which is provided as an adapter for the support of a board 10 and which exhibits a peg-shaped connection profile corresponding to the sleeve-like connection profile, can be placed in the upper connection profile. The extension section 8 can be positioned within a sleeve-shaped connection profile of an extension arm 4. Allocated to each of the sleeve-shaped connection profiles are fixing means in the form of fixing screws to secure the inserted position of the particular component.

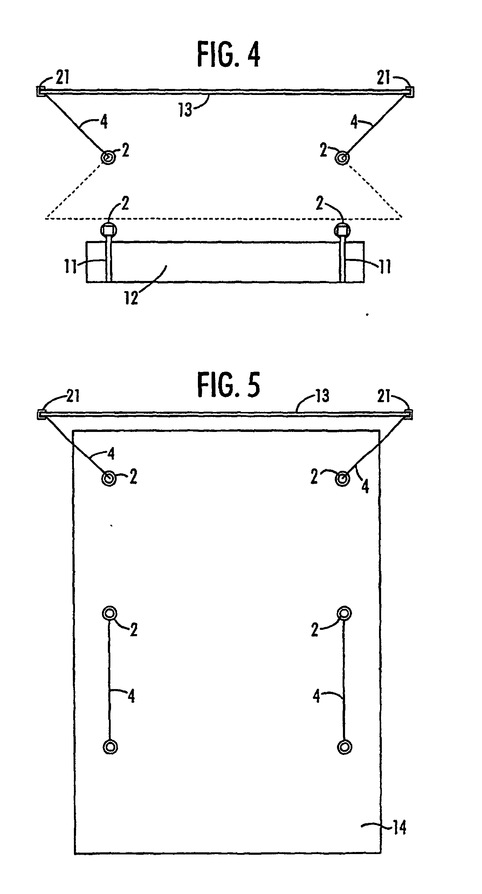

In the case of the embodiment shown in Figure 4, the basic frame as shown in Figure 1 is represented, where the four support columns 2 are positioned in rectangular fashion relative to each other, whereby allocated to each of the two rear support columns 2 in Figure 4 is a swivelling extension arm 4. The two extension arms 4 are provided at their free ends with U-shaped vertical support sections between which there extends a panel-shaped background screen 13. In accordance with a form of execution that is not shown, the holding sections positioned in the extension arms 4 can be supplementally connected to each other by means of a transverse beam that supports the background screen 13 from below. Inserted into the front support columns 2 by means of corresponding connection profiles are holding sections 5 (not shown), which carry two horizontally projecting support sections 11 that bear a shelf panel. In the same way, several shelf panels 12 that lie one above the other can be provided as well, in a way similar to Figure 1. As can be seen from the dotted lines, the background screen 13 can also be brought closer to the shelf panel 12 that is serving as the panel arrangement. To do this, the background screen 13 is easily removed from the holding sections and the extension arms 4 are swivelled forward by the same amounts. The background screen 13 is then connected to the holding sections.

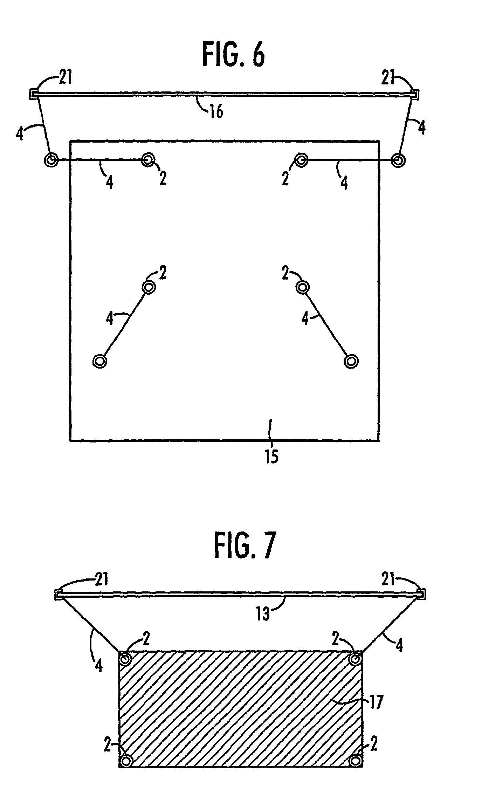

In the case of the embodiment per Figure 5, each of the support columns 2 of the basic frame is provided with an extension arm 4 that is supported in such a way that it can swivel. In a way analogous to Figure 4, the two rear extension arms 4 bear corresponding holding sections, between which extends a background screen 13. In an axial extension of the support columns 2, the connection profiles of the extension arms 4 additionally exhibit non-slip support pads which are not shown in detail and on which rests a support panel that is configured as an opaque panel 14. In addition, the opaque panel 14 rests on the appropriately positioned non-slip support pads of two front extension arms 4, which extend forward from the support columns 2 parallel to the side edges of the rectangular opaque support panel 14. Thus, like with the embodiment illustrated in Figure 4, a horizontal support panel arrangement is also combined with a vertical screen arrangement.

The embodiment in accordance with Figure 6 is similar to the embodiment shown in Figure 5. Here, an opaque panel 15 of about the same size is positioned with its transverse side instead of its long side on the support pads of the extension arms 4. In addition, allocated to each of the two rear support columns 2 are two extension arms 4 that supplement each other to form a scissor-arm arrangement. In conjunction with that, the second extension arm 4 is rotatably supported in the free end of the first extension arm 4 that is supported on the support column 2. The second extension arm 4 bears a background screen 16 that has a larger form than the background screen 15 per Figure 5. As a result of the paired arrangement of the extension arms 4, it is possible to shift the background screen 16 parallel or diagonally at various angles relative to the rear edge of the opaque panel 15, and thus change the distance from the background screen 16 to the opaque panel 15.

Of course, the extension arms 4 in the support columns 2 can also be supported via the intermediate placement of extension sections or sleeves so different heights can be set for the particular opaque panel in question.

Figure 7 shows an additional embodiment similar to Figure 5, in which a small opaque panel 17 is positioned with its corners on the extension arm 4 support profiles that are placed on the axial extension of the support columns 2, and on the support columns 2 themselves. By putting a non-slip backing in between, it is possible to place an additional support panel on top of such a support panel 17, which makes it possible to increase the effective size of a corresponding support panel. It is also possible to create visual effects in this way by using a translucent, transparent or colored panel, or any combination of these.

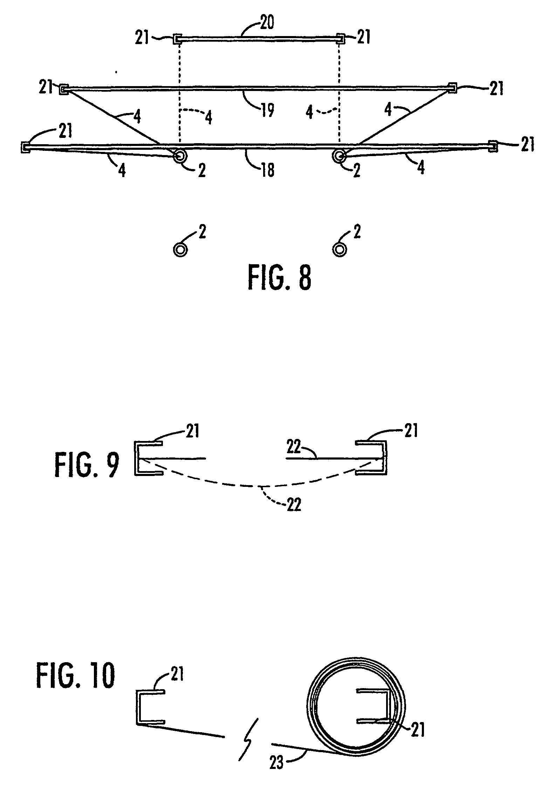

The embodiment per Figure 8 shows some different application options of the extension arms 4 as carriers for holding sections 21, between which background screens 18, 19, 20 of various lengths are attached. In conjunction with that, each of the holding sections 21 is configured as U-shaped hollow sections that are open towards the opposite channel section 21. The holding sections 21 can be provided with stops in their base regions so the background screens 18, 19, 20 can be inserted between the holding sections 21 from above. In a similar way, the holding sections 21 can have allocated to them clamping devices that fix the background screens 18, 19, 20 to each holding section 21. Finally, a preferred solution is to fix the extension arms 4 themselves in place in their particular angular positions relative to the stationary support columns 2 by fixing the corresponding connection profiles in place in the sleeve-shaped connection profiles of the support columns 2 by means of the clamping screws. The extension arms 4 are aligned in different angular positions per Figure 8 depending on the width of the background screens 18, 19, 20. The background screens 18, 19, 20 that serve as the screen arrangements are panel-like in shape, and are preferably made of translucent Plexiglas.

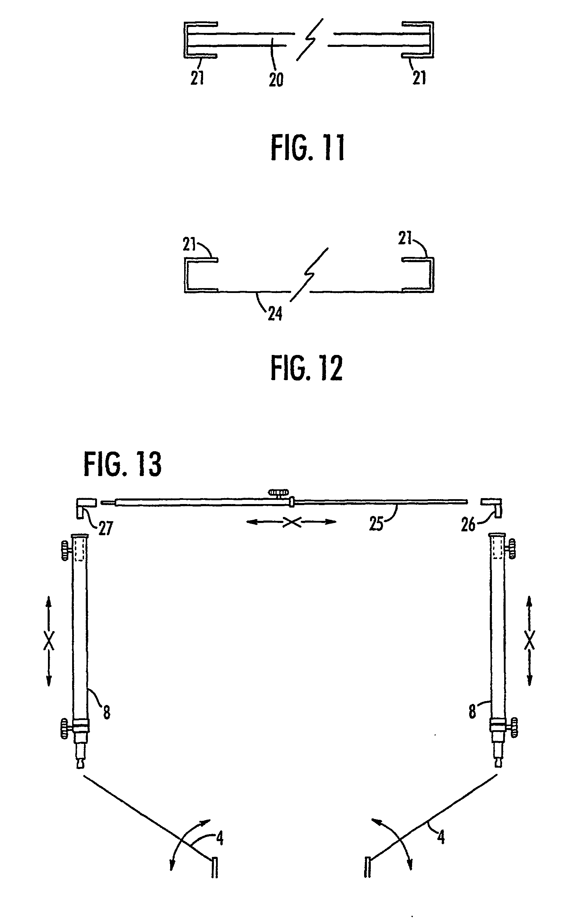

Figures 9 through 12 disclose various screen arrangements that can be positioned between the opposite holding sections 21. Thus, a first screen arrangement shown in Figure 9 is configured as a flexible panel screen 22 that is clamped between the opposite holding sections 21 and can be secured between the holding sections 21 in a convex curve. The holding sections may be rotated about a longitudinal axis thereof, in order to achieve any desired convex or concave curve. In the embodiment illustrated in Figure 10, the screen arrangement is formed by means of a flexible flat-shaped article 23 that can be rolled up and that can be fixed in place by its front edge to one holding section when in its pulled out state, and otherwise can be rolled up on the other holding section 21. The flexible flat-shaped article 23 that can be rolled up thus makes possible an exceptionally easy adaptation to different screen widths. The design shown in Figure 11 represents a stable panel, preferably a Plexiglas or cardboard panel 20.

In the case of the embodiment illustrated in Figure 12, a foil-like screen arrangement 24 is fixed on a front side of the two holding sections 21, specifically, it is glued on or fixed in place in some other way.

Shown schematically in Figure 13 is a transverse connection between two extension arms 4 that are positioned in swivelling fashion on corresponding support columns 2, whereby each extension arm 4 exhibits at its free end a vertically aligned extension section 8. The two extension sections 8 can be adjusted for length in accordance with the arrow representation. With the aid of corner connectors 27, 26 that exhibit connection profiles that correspond to the upper connection profiles of the extension sections 8, a telescoping transverse beam section 25 can be connected to the extension sections 8. Here as well, the connection is made via corresponding connection profiles.

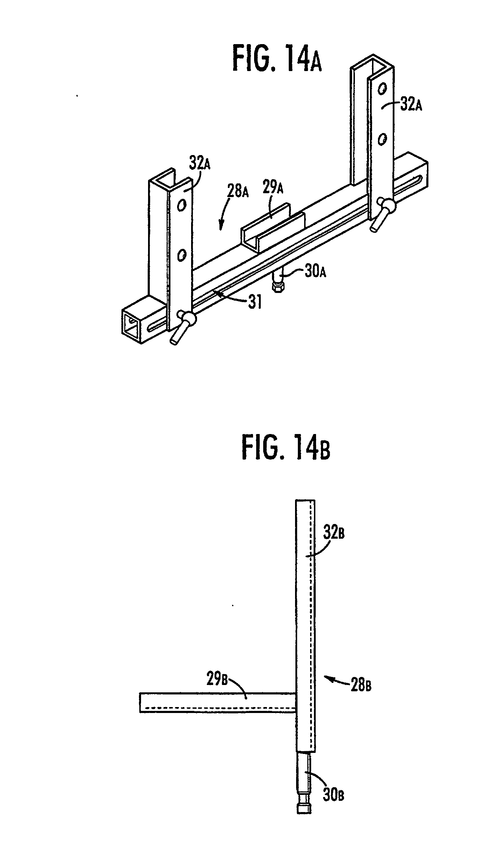

Provided in Figure 14a and serving as a system component is a carrier 28a which is for a vertical panel-shaped screen arrangement and which is supported, in a corresponding connection profile of an extension arm, compensating sleeve or support column, by means of a plug-in peg 30a that is configured as a male connection profile 30a, in such a way that it can swivel around a vertical axis. The carrier exhibits a holding base 29a in which a lower edge of the screen arrangement can be placed. In addition, the carrier 28a exhibits two side frame sections 32a that can be displaced along a straight guide track 31 and thus along the carrier 28a, and can thus be adjusted to the differing widths of screen arrangements. Like the embodiments described earlier, the frame sections 32a are provided with U-shaped hollow sections that are open towards the inside, between which the particular screen arrangement can be inserted.

An especially preferable system component for a vertical, panel-shaped screen arrangement shown in Figure 14b exhibits an assembly that can be produced simply and inexpensively. The carrier 28b that is shown is configured as an angle holder by being assembled from two U-sections 29b, 32b that have been placed together at right angles. The U-sections 29b, 32b are configured and aligned in such a way that the panel-shaped screen arrangement can be inserted into this angle holder from above. The U-shaped section 32b, which is aligned vertically when mounted exhibits at its lower end a peg-shaped connection profile 30b, which, analogous to the connection profile 30a in accordance with the embodiment per Figure 14a, can be inserted into a corresponding sleeve-shaped connection profile of an extension arm, support column or other system component. The connection profile 30b is cylindrical in shape, so the carrier 28b is held inside the connection profile of the extension arm, support column or other system component so it can rotate around a vertical axis. In addition, the panel-shaped screen arrangement can be firmly clamped in the U-shaped sections of the carrier 28b by means of spring clips, whereby these spring clips are configured in the same ways as spring clips for picture frames, which are known in the art. The screen arrangement is thus held by means of a single carrier 28b, which can be aligned in various angled positions and can thus hold the screen arrangement in almost any desired position.

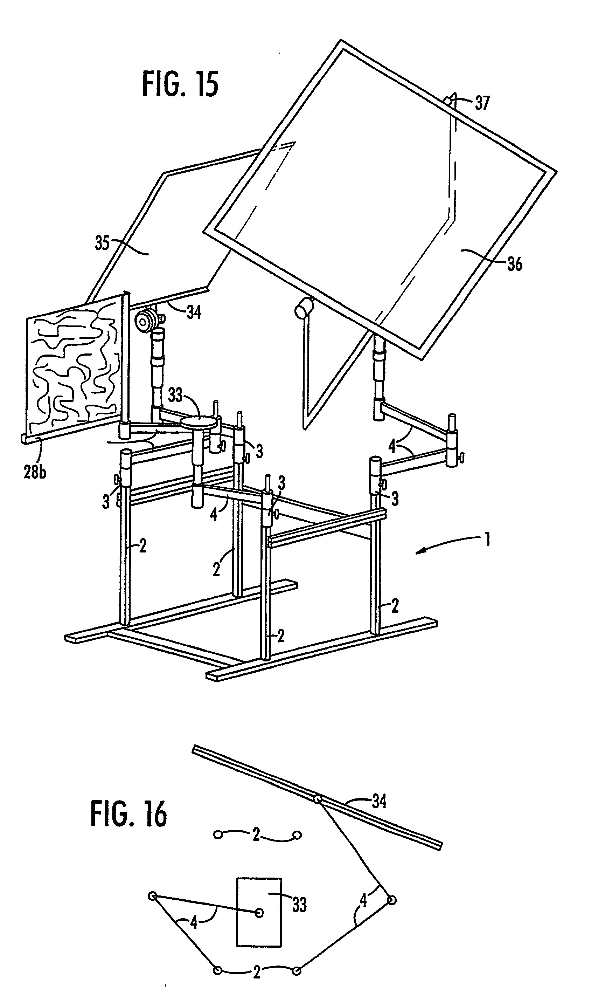

In the case of the embodiment illustrated in Figure 15, allocated to each of the upper end faces of the support columns 2 are connection profiles 3, whereby one extension arm 4 is supported in swivelling fashion in each of three connection profiles 3. By means of an extension section 8 that can be adjusted for length, the one extension arm 4 bears a horizontal support panel 33 that is used to hold the object to be photographed. Allocated to each of the other two support columns 2 is a pair of extension arms 4 that thus forms a scissor-arm arrangement and offers expanded possibilities for movement. Profiting from these expanded possibilities for movement are two tilting screen arrangements 35, 36, each of which is held in a yoke-like support frame 34. First, the support frames 34, which serve as swivel frames, are supported around a vertical axis of rotation on corresponding vertical and length-adjustable extension sections 8 of the extension arms 4. Second, each of the screen arrangements 35 and 36 is supported on vertical legs of the support frames 34 around a horizontal tilting axis by means of swivel bearings 37. The individual swiveling and tilting positions can be secured via fixing means that are not shown in detail. A carrier 28B is also shown as a system component in Figure 15.

In the case of the embodiment shown as a top view in Figure 16, only two support columns 2 are provided with extension arms 4 arranged in pairs, so two scissor-arm arrangements result. One scissor-arm arrangement supports the support panel 33 for holding the object to be photographed. The other scissor-arm arrangement supports a support frame 34 such as that shown in Figure 15.

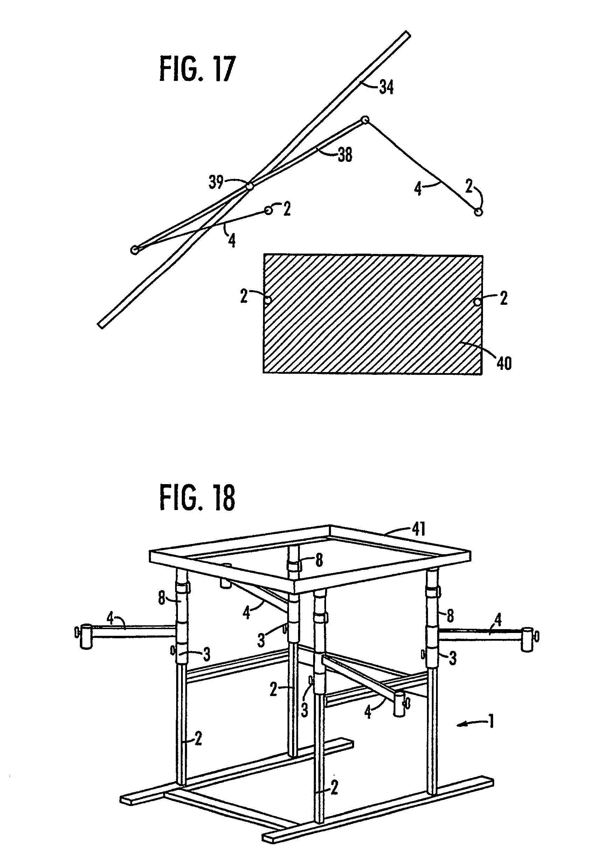

In the case of the embodiment shown in Figure 17, a support frame 34 illustrated in Figures 15 and 16 is supported in a swivelling fashion on a transverse beam section 38, whereby the swivel bearing 39 with the vertical swivelling axis is positioned at the midpoint of the transverse beam section 38. The transverse beam section 38 is in turn supported in a swivelling fashion in the region of the free end of the extension arms 4 by means of corresponding connection profiles. The two-point support of the transverse beam section 38 makes it possible to support the support frame 34 securely, even if the latter exhibits great weight. In addition, complex movement possibilities are provided for the support frame 34, and thus for a corresponding screen arrangement, relative to a stationary support panel 40. The transverse beam section 38 can be provided with two connection profiles that are open to the bottom and that can be attached directly to the peg-shaped connection profiles of the extension arms 4.

An additional embodiment of a photography system in accordance with the invention exhibits, shown in Figure 18, a basic frame 1 that supports a horizontal, four-cornered support frame 41. In conjunction with that, the support frame 41 is provided with L-shaped support sections that make possible the insertion of a support panel into the support frame 41. At the level of the four support columns 2, the support frame 41 exhibits connection profile characteristics for attachment thereto. These bases are held in corresponding connection profiles of length-adjustable extension sections 8, which rest in turn on peg-like connection profiles of the extension arms 4. In addition, the extension arms 4 exhibit peg-like downward projecting connection profiles that are held in the seats 3. In turn, the latter serve as sleeve-like connection profiles of the support columns 2.

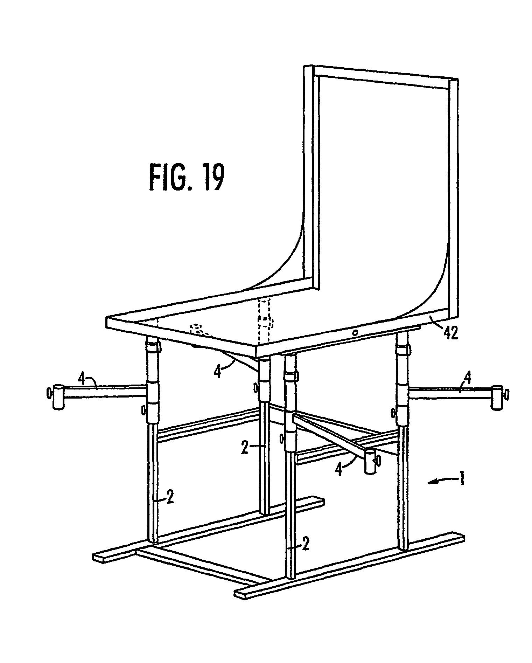

The form of execution illustrated in Figure 19 is based on the form of execution shown in Figure 18. In accordance with Figure 19, additionally placed on the support frame 41 is an angle frame 42, which is made up of a horizontal frame segment and a vertical frame segment placed at a right angle. The angle frame 42 is joined in fixed fashion by its horizontal frame segment, at least in the region of its longitudinal side, with the support frame 41 by means of detachable fastening means. As in Figure 18, the support frame 41 is held in the extension sections 8 of the support columns 2 of the basic frame 1. A flexible, but largely inherently stiff flat-shaped article, preferably a Plexiglas, cardboard or formica sheet, can be carried in the angle frame 42. Suitable clamping or securing means, which are not shown in detail in Figure 19, are provided for that purpose. The transverse frame sections of the of the support frame 41 can also be removed if they are not needed for the support the flat-shaped article from below or for the overall stability of the assembly. Particularly in the case of a transparent flat-shaped article, the rear transverse frame section of the support frame 41 is removed in order to prevent disturbing shadows from being produced by the illumination, so the support frame 41 now exhibits only three sides.

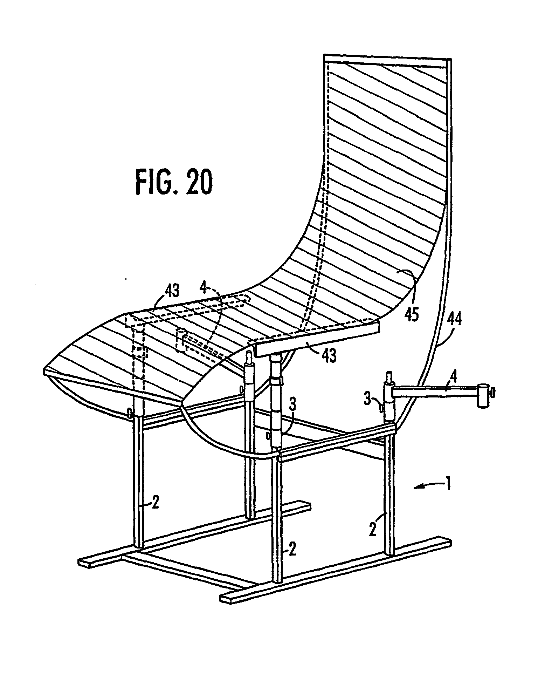

In Figure 20, the basic frame 1 bears a three-dimensional flat-shaped article 45 that, analogous to the flexible flat-shaped article per Figure 19, is inherently stiff but configured in a flexible way and is preferably made from a Plexiglas material. The Plexiglas material of the flat-shaped article 45 is preferably translucent and sand-blasted. The flat-shaped article 45 is held in a curved frame 44, which is securely joined to the flat-shaped article 45 in the region of the front and rear edges at the ends of the latter. In addition, the flat-shaped article 45 is held in the two vertical legs of the curved frame 44, adjacent to the upper transverse beam. In conjunction with that, the flat-shaped article 45 exhibits dimensions that differ from known Plexiglas articles, which is merely suggested in Figure 20. In particular, the distance from the horizontal region to the back side is longer and the height of the back side is greater, so that a vertical plane with a width/length ratio of 1 to 2 can be achieved. The absolute width of the flat-shaped article is narrower and the ratio of width to height is lower. The inherently stiff but flexible flat-shaped article 45 is held by two horizontally aligned support rails 43, which are held in the connection profiles 3 and thus to the support columns 2 by means of vertical support sections. The suitably curved frame 44 consists of two hollow horizontal sections that extend between opposite support columns 2 of the basic frame and that are configured as parallel tubes lying one above the other, as well as front and rear curved support segments that are inserted into these horizontal sections. In conjunction with that, each of the support segments is slipped into a different pair of the horizontal sections so that they can be positioned independently of each other. The insertion depth of the support segments into the hollow horizontal sections fixed to the basic frame can be varied, as a result of which the curvature and arrangement of the flat-shaped article can also be varied. In conjunction with that, the intended curvatures of the carrier segments are more stable than correspondingly angled carrier segments.

In the embodiments illustrated in Figures 18 through 20, each of the swivelling extension arms 4 is shown with no function. These extension arms 4 can be used to hold the widest possible variety of system components of the photography system. Preferably, however, lighting equipment and camera stay separated to the basic frame 1 and thus to the extension arms 4 as well.

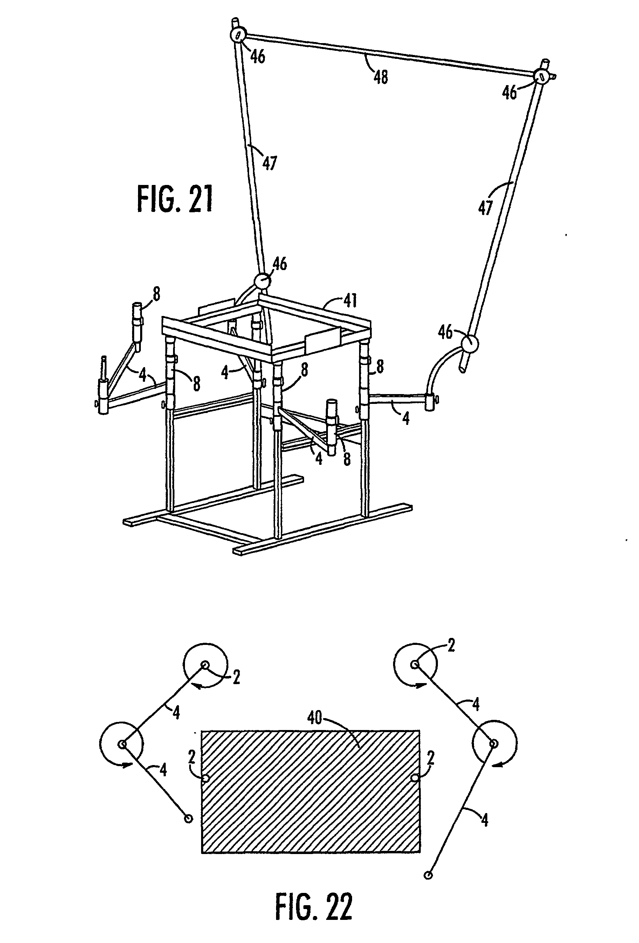

The embodiment shown in Figure 21 corresponds to the embodiment illustrated in Figure 18. What is different about this embodiment, however, is the fact that the two rear extension arms 4 carry a support structure 46 through 48 that can be positioned in various ways. Held in the extension arms 4 are curved support arms that are joined at their free ends to upward-projecting support tubes 47 by means of connecting joints 46. The opposing support tubes 47 are connected to each other by means of connecting joints 46 and a transverse beam 48. The transverse beam 48 can be aligned horizontally or diagonally. This is dependent on, among other things, the positioning of the connecting joints 46, which are configured as revolute-joint clamps or gripping heads for relative rotating movements of two components in different planes. The transverse beam 48 plays a role for a flat-shaped article that can be rolled up and unrolled and that can be used as a background for a support panel that can be positioned in the support frame 41. Due to the fact that, as a result of the sum of possible movements of the extension arms, support arms, support tubes, etc., the transverse beam 48 can be positioned in various diagonal or even crooked positions relative to the support frame 41, an individual adaptation of the flat-shaped article to the desired object photograph becomes possible. In place of the curved support arms, support arms offset at right angles can also be provided.

Shown in Figure 22 is the functioning of the scissor-arm arrangement formed by two extension arms 4, as a result of which suitable system components that are held on the extension arms are provided for a corresponding stationary support panel 40 that is secured to the basic frame, via the connection profiles of two support columns 2.

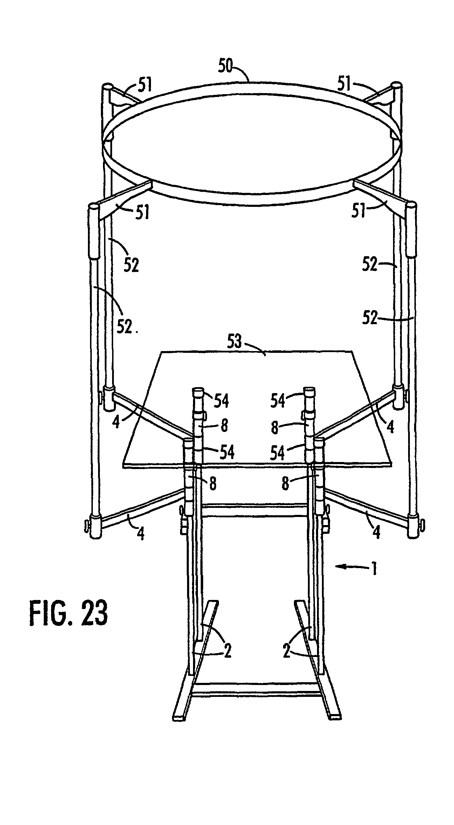

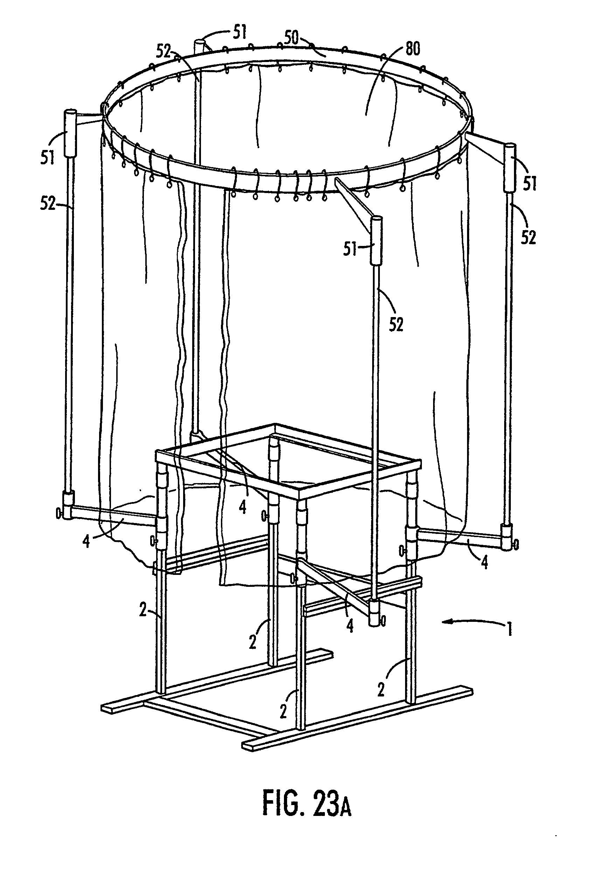

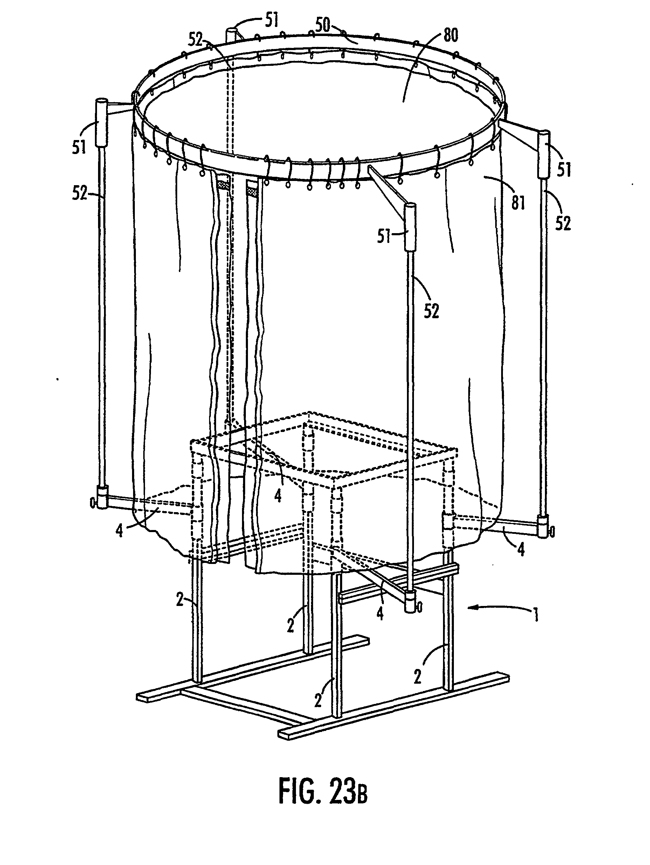

Shown in Figure 23 is a framework for a cylindrical tent assembly, whereby the framework is comprised of stretching and support means. A flat-shaped article that is made of textile or plastic foil and not shown is pulled up onto or suspended from a horizontal support ring or track 50, and may be stretched. The flat-shaped article then hangs down freely. The support ring 50 is held by four support angles 51 that are positioned on vertical support rods 52, which may be attached from the side, as shown, or from above. The curtain assembly, shown in Figure 23A may be attached in such a way that the attaching means may pass freely about the support ring or track 50, unencumbered by the support angles 51. The curtain member 80 may have reflective properties or may be translucent, or some combination of these features. The vertical ends of the curtain member 80 are provided with connecting means for attaching the ends to each other to form a closed tent member. The connecting means, in a preferred embodiment, are hook and loop fasteners. This arrangement allows a lens from a camera or imaging device to be placed between the ends of the curtain member 80, and a seal is formed around the lens using the hook and loop fasteners.

Figure 23B shows another embodiment of the curtain member shown in Figure 23A, where an opaque curtain member 81 is disposed about the outer periphery of an inner reflective curtain member 80. The second curtain member is shown as opaque in Figure 23B, however it is to be understood that the second curtain member may be colored, translucent, transparent, or have any other suitable qualities necessary to affect the lighting therein. This configuration may enhance the lighting quality in the area surrounded by the curtain members, and prevents spill light from leaving the sides of the tent. The outer curtain member may be attached to the support ring similarly to the inner curtain member, or in an alternate embodiment, the outer curtain member may be attached by hook and loop fasteners, such as VELCRO, directly to the inner curtain member. In a preferred embodiment, the outer curtain member is provided in segments about the outer periphery of the inner curtain member.

In Figures 23, 23A and 23B, each of the support rods 52 is in turn held in a corresponding support profile of an extension arm 4. The support ring 50 is positioned concentrically over a horizontal holder panel 53, which is supported on short, vertical extension sections 8 of the support columns 2 with the aid of non-slip support pads 54. Although the horizontal holder panel 53 is shown herein, it is not a necessary component of the photography system, because any object may also be placed on the floor, to obtain the desired height of the object, if desired by the photographer. In an alternate embodiment, the suspended support ring tent assembly may be employed as a separate, free-standing unit.

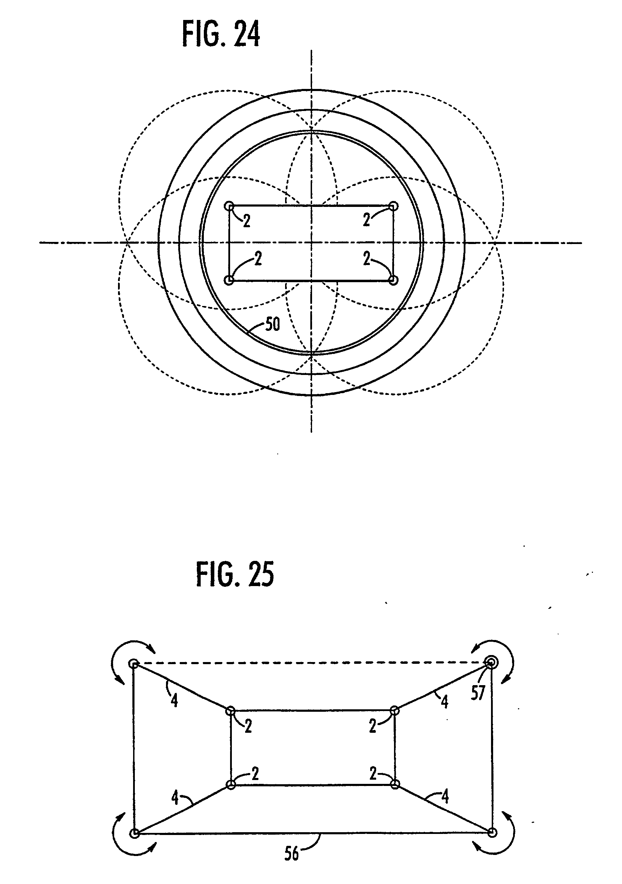

Shown in Figure 24 are different versions of the cylindrical tent assembly illustrated in Figure 23. As can be seen from Figure 24, support rings of various sizes can be easily supported due to the fact that the four extension arms 4 are positioned at different angles along their individual circular paths around the associated support column 2. The circles shown with dotted lines represent the paths of movement of the free ends of the extension arms 4. The concentric circles in the middle represent any desired diameters selected for the support rings.

Shown in Figure 25 is another tent assembly in which each of the four extension arms 4 is provided with a vertical upward-projecting support section. A roll 57 comprised of a flat-shaped article 56 that is made of a textile or a plastic foil and that is flexible is positioned on one support section. The flat-shaped article can now be withdrawn from this roll 57 and directed around the support sections of the other extension arms 4. The free end of the flat-shaped article is hung up or fixed in place in some other way again in the region of the roll 57 in order to obtain an open or closed jakket. The extension arms 4 can be moved to form not only the rectangular arrangement of the given flat-shaped article 56 that forms the sides of a rectangular tent, but also any desired irregularly shaped tent, such as a single sided, two sided, three sided, or four sided tent, in any desired configuration such as quadrangle, trapezoid, square, or any other geometrical shape at all can be obtained. The sides of the tent are shown stretched around a support panel 55, but is not limited to the support panel 55 shown in this drawing. In the same way, it is possible, using a textile material, to achieve an open, merely level or else three-dimensional surface by means of the flat-shaped article by hanging it from or in some other way securing it to other suitable poles of the extension arms 4 in question. The tent jacket can thus by stretched in various ways, depending on the user's intended purpose.

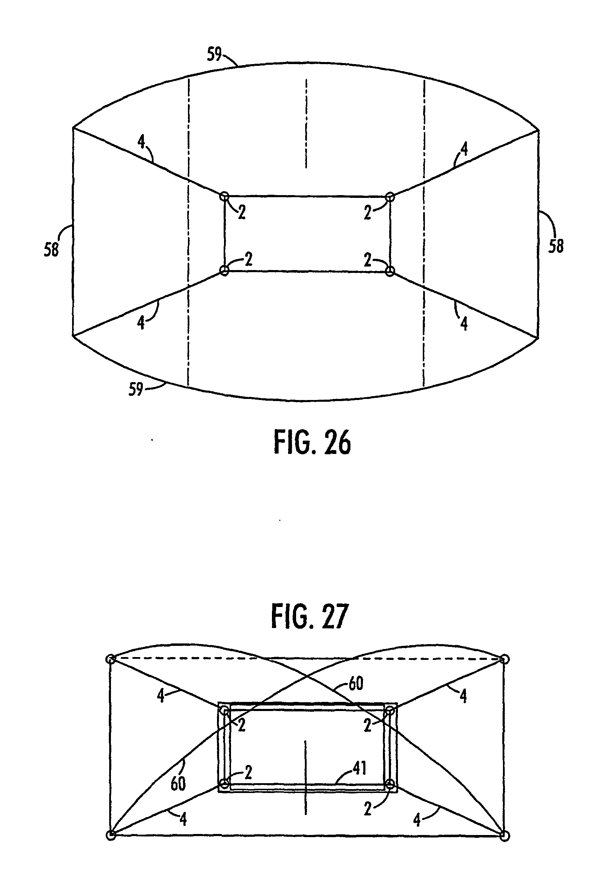

In the embodiment shown in Figure 26, a billowed tent assembly is formed by means of flexible tensioning bows 58, 59, each of which is connected to the extension arms 4.

In the case of the embodiment illustrated in Figure 27, an asymmetric cupola- or dome-like tent assembly is obtained by means of two flexible tensioning bows 60, each of which is connected to diagonally opposed extension arms 4. The extension arms 4 can additionally be connected to each other by means of transverse beams that are not shown in detail. The support columns 2 bear a support frame 41 for holding a suitable support panel on which an object to be photographed can be placed.

All of the tent assemblies may exhibit, in the corresponding flat-shaped article that forms the tent, an opening for a camera lens.

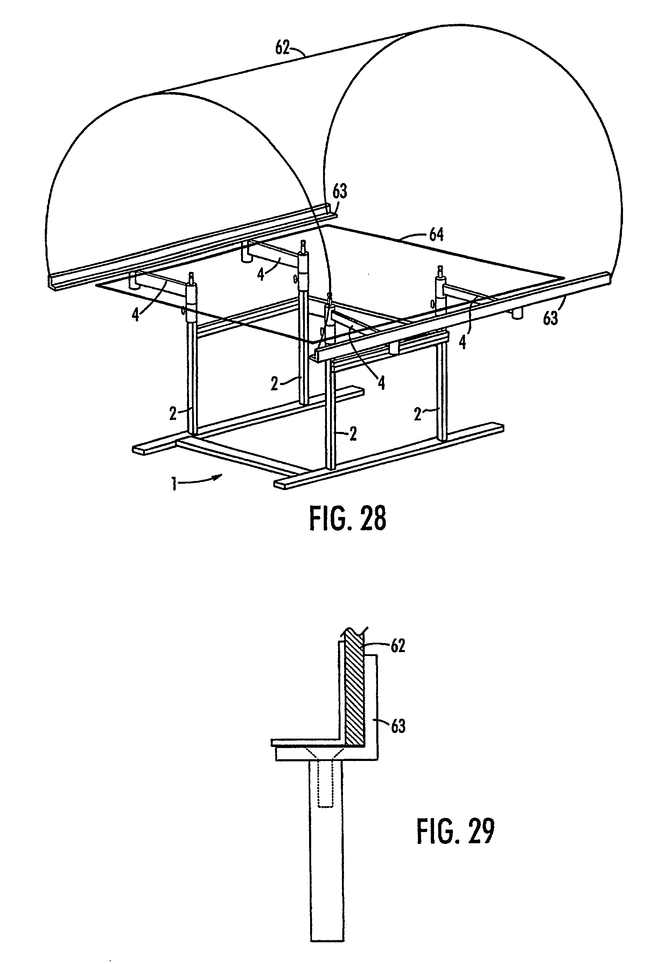

In the case of the embodiment shown in Figures 28 and 29, a tunnel-like tent assembly is formed by means of an inherently stiff but flexible flat-shaped article, preferably a translucent Plexiglas material, that reaches over a horizontal support panel 64 in a semi-cylindrical way. The tunnel-like flat-shaped article 62 is held in place in the region of its opposing side edges by means of support rails 63. The support rails 63 are positioned in corresponding sleeve-shaped connection profiles of the extension arms 4 by means of peg-shaped connection profiles.

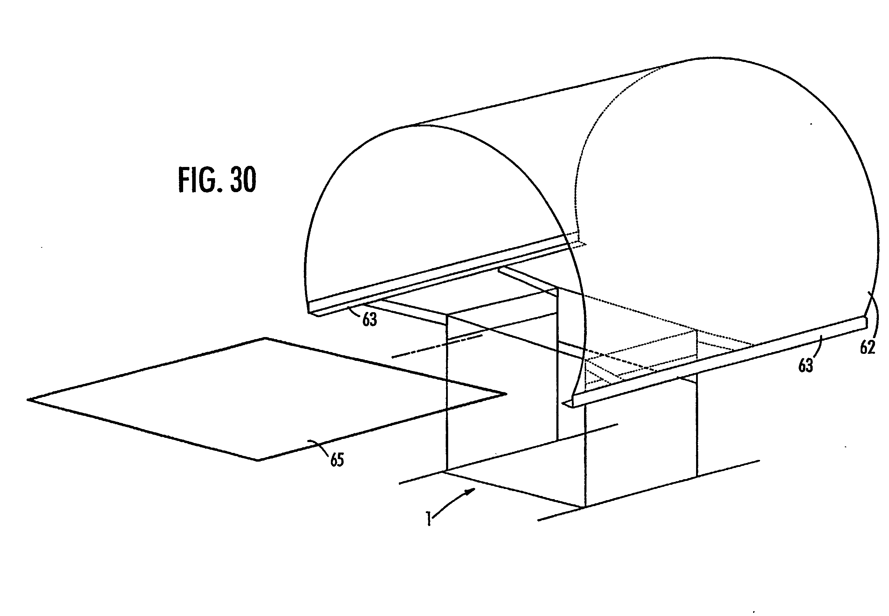

The representation in Figure 30 makes it clear in addition, that this holder panel 65 does not necessarily have to be slipped onto the support rails 63, but can instead be laid directly on extension arms so that a variety of holder panels with different sizes can be used. In this instance, the extension arms 4 need their own non-slip support pads.

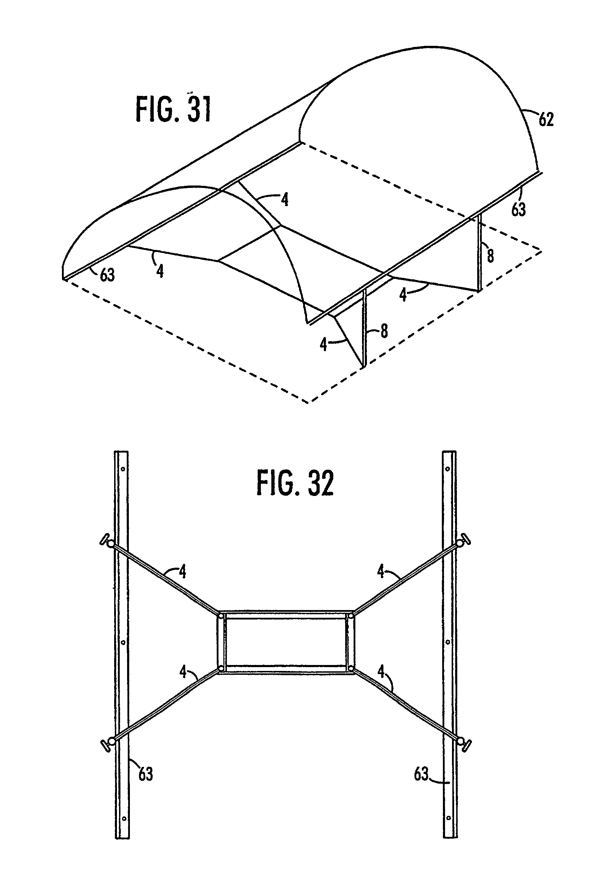

The embodiment shown in Figure 31 differs from the embodiment illustrated in Figure 30 or the embodiment shown in Figures 28 and 29 only in the fact that allocated to one support rail 63 are two length-adjustable extension sections 8, by means of which the support rail 63 is connected to the two extension arms 4. An asymmetrical form of the tunnel assembly can be obtained in this way.

From the top view shown in Figure 32, it can be seen that the support rails 63 in accordance with the embodiments depicted in Figures 28 through 31 can be fixed to the extension arms 4 through fixing means in the form of clamping screws, so the extension arms 4, together with the associated support rails 63, cannot carry out any unwanted swivelling movements.

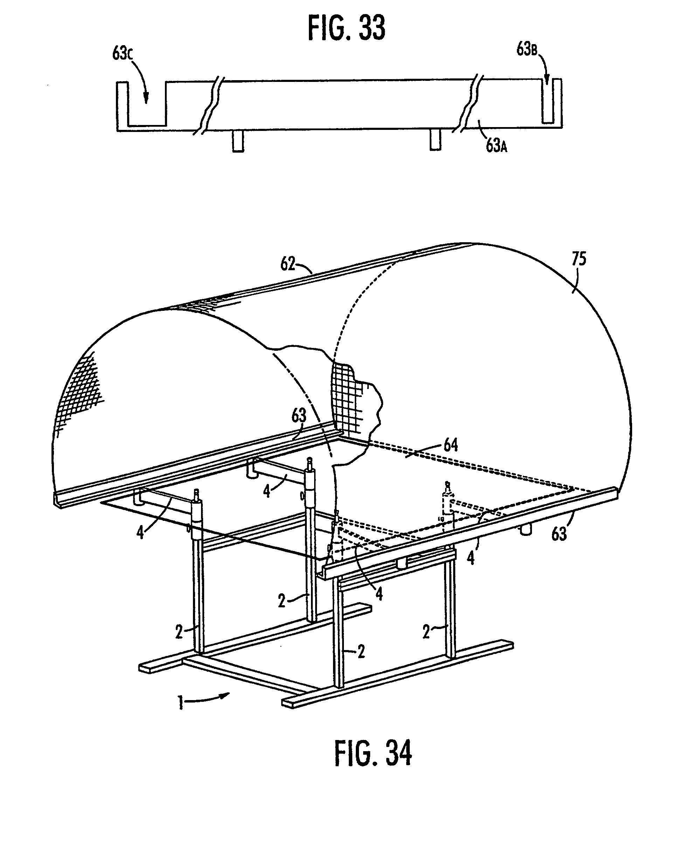

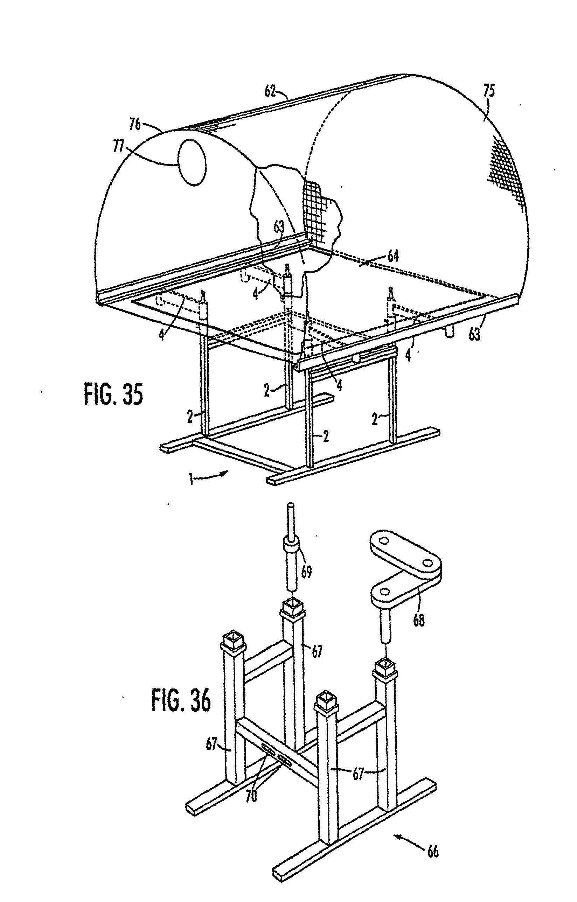

The support rail 63a shown in Figure 33 corresponds in essence to the previously described support rails 63. In order to be able to close off the tunnel-shaped tent assembly at the ends, semicircular end panels 75, 76 are provided which are typically made from the same material as the flat-shaped article 62 and are inherently stiff. To hold these end panels 75, 76, each of the opposing support rails 63a in their specific arrangement illustrated in Figure 33 exhibits a holder slot 63b or 63c on the vertical segment of the angle section on their opposing end.regions. The somewhat wider slot 63c permits the use of flat shaped articles 62 having slight variations of widths. The holding of the end panels 75, 76 in the holder slots 63b or 63c is carried out through suitable fixing means such as adhesive agents, special transparent and colorless tapes, or some other form of fixing means. The end panel 75 is shown in Figure 34, where the other end is open. The end panel 76 shown in Figure 35 additionally exhibits a circular opening 77 for insertion of a camera lens. The circular opening 77 is shown in a preferred position, but it is to be understood that this circular opening may be positioned at any suitable location. The addition of end panel 75 makes the configuration shown in Figure 35 an essentially closed tent.

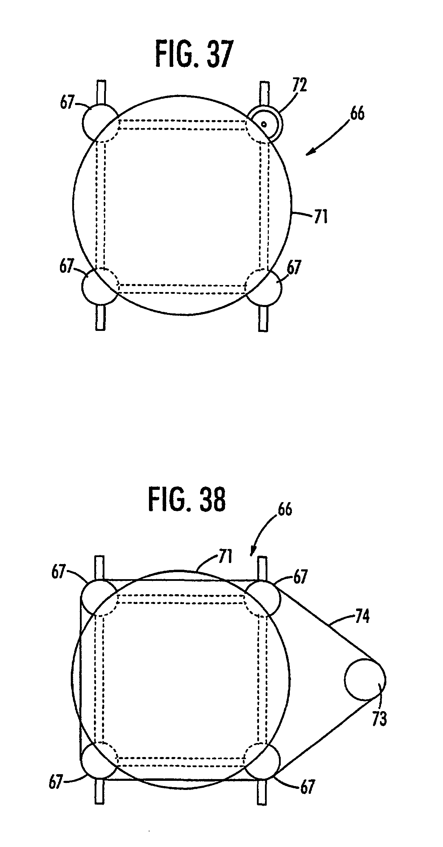

In the case of the embodiment per Figure 36, an exceptionally rugged assembly of a basic frame 66 with a rectangular base is provided, which can accept heavy loads. Both the support columns 67 and the individual transverse beams are formed from square hollow sections. The support columns 67 exhibit in the region of their upper faces an expansion that is used to hold pivot bearing arrangements and/or to hold driving means. The support columns 67 can have either a cylindrical or a square shape. The component 69 can be arranged, first, coaxially adjustable for length relative to the support column 67, and second, rotatably within the support column 67. The corresponding driving means are located within the support column 67. The component 68 represents an elbow that is suitable for mounting a camera or for holding an object to be photographed or some other necessary piece of equipment. The legs of the elbow 68 are supported at an exact height. The elbow 68 projects into the support column 67 by means of a drive pin, whereby the corresponding driving means are integrated in the support column 67. Laid additionally within the support columns 67 and the transverse beams are power supply lines and transmission lines that permit electrical or electronic control of the driving means for various system components of this photography system. Terminal blocks 70 connect the driving means with external power supply sources or electronic control units. This form of execution is thus especially well-suited for very precise, repeatable incremental movements. Features of this type are preferred for trick and special-effect photographs, and are also well-suited for scientific photography. This movement and its control are well suited to video and cinematography.

Shown in Figures 37 and 38 are two different drive concepts for a horizontal, rotatably supported platform 71 that is supported on a basic frame 66, which, in comparison with the basic frame 66 in Figure 36, exhibits a different base, specifically, a square one. For that, supported in each support column 67 is a rotary table on which the platform 71 rests in such a way that it is supported so it can rotate concentrically around a central axis of rotation. In addition, integrated into at least one of the support columns is a drive unit 72 that acts directly on the outer edge of the platform 71.

In the case of the embodiment per Figure 38, all four support columns 67 are provided with rotary tables on which the platform 71 is supported so it can rotate concentrically. The rotary tables are driven by means of a traction mechanism drive in the form of a belt or chain drive 74 that serves as the transmission means for a drive motor 73.

In conjunction with that, each of the support columns 67 shown in Figures 36 through 38 is provided with open end faces that are configured as connection profiles for the insertion of pivot bearings and driven or non-driven system components such as extension arms, etc. When a center drive mechanism is used, the support panel is preferably opaque, in order to hide the drive mechanism. In Figures 37 and 38, no center drive mechanism is present, which affords the possibility of using a transparent or translucent support panel.

While a preferred embodiment of the invention has been described using specific terms, such description is for illustrative purposes only, and it is to be understood that changes and variations may be made without departing from the scope of the following claims.

## Claims

1. A modular photography system comprising a basic frame (1) with four vertical support columns (2) that are rigidly connected to each other, **characterized in that** each of the support columns (2) are provided at their upper end faces with connection profiles (3) to receive additional system components (4, 6, 8, 47, 52) having corresponding connection profiles, wherein the connection profiles (3) of the support columns (2) and of the additional system components (4, 6, 8, 47, 52) are configured in such a way that the respective connection profiles of the support column (2) and the additional system component (4, 6, 8, 47, 52) are inserted one into the other coaxially to the longitudinal axis of the respective support column (2), and that at least one first extension arm (4), serving as an additional system component, is detachably connected to one of said connection profiles (3), said extension arm projecting essentially radially to the longitudinal axis of said associated support column (2).

2. Photography system in accordance with claim 1, wherein said extension arm (4), of which there is at least one, is supported on said associated connection profile (3) of said support column (2) so that said extension arm (4) can rotate around a longitudinal axis of said support column (2).

3. Photography system in accordance with claim 1, wherein all of said connection profiles (3) of said support columns (2) are placed at least approximately in a common horizontal plane.

4. Photography system in accordance with claim 1, wherein each said extension arm (4) exhibits at its free end a connection profile (3) that corresponds to connection profiles (3) of said support columns (2), and is used to hold or support additional system components or units (6, 8).

5. Photography system in accordance with claim 1, wherein each of said system components or system units (5, 6, 8, 28a, 28b) is provided with at least one connection profile (3) that corresponds to said connection profiles of said extension arms (4).

6. Photography system in accordance with claim 1, wherein one extension arm (4) is connected to each support column (2), whereby all of said extension arms are rotatably supported in a common horizontal plane.

7. Photography system in accordance with claim 1, further comprising at least one extension section having a connection profile (3) on at least one end face, and where said extension section serves as a system component.

8. Photography system in accordance with claim 7, wherein said extension section, of which there is at least one, is made so it is adjustable for length.

9. Photography system in accordance with claim 4, further comprising an additional extension arm having connection profiles (3) at both ends, said additional extension arm (4) rotatably connected to said free end of said first extension arm (4), so that said free end of said additional extension arm (4) may be adjusted in any desired planar position, rather than in a simple arc motion.

10. Photography system in accordance with claims 1 or 9, further comprising a carrier device that may be attached to any connection profile (3) to carry a system component.

11. Photography system in accordance with claim 10, further comprising at least one support panel attached to said carrier device, where said support panel serves as a system component and is specifically designed as a board, holder panel or shelf.

12. Photography system in accordance with claim 10, further comprising at least one preferably vertically aligned screen that that serves as a system component, and is at least largely dimensionally stable, and which is attached to said carrier device.

13. Photography system in accordance with claim 12, wherein said screen is configured as a panel-like shape.

14. Photography system in accordance with claim 12, wherein said screen is configured as a three-dimensional flat-shaped article.

15. Photography system in accordance with claim 14, wherein a flexible screen, specifically in the form of a flexible flat-shaped article, is provided.

16. Photography system in accordance with claim 10, wherein said carrier device is provided with a horizontally or vertically aligned support shaft, which is for holding a flexible flat-shaped article that can be rolled up and unrolled, and which is rotatably supported on a mount that is fixed in position on said frame.

17. Photography system in accordance with claim 10, wherein said carrier device exhibits two curved support segments that can be connected to said basic frame.

18. Photography system in accordance with claim 14, wherein said carrier device exhibits a swivel frame for holding a panel-like screen.

19. Photography system in accordance with claim 14, wherein said carrier device. exhibits length-adjustable horizontal or vertical holder sections.

20. Photography system in accordance with claim 1, further comprising a tent assembly that can be connected to said basic frame or to said extension arms (4).

21. Photography system in accordance with claim 20, wherein supporting means for a tent formation of said tent assembly are provided, said supporting means being fixed in place either on said basic frame or said extension arms (4) by means of said connection profiles (3).

22. Photography system in accordance with claim 21, wherein said supporting means comprises a support ring or track that is supported on vertical holder arms, which supports an at least partially cylindrical suspendable tent formation.

23. Photography system in accordance with claim 1, wherein said connection profiles (3) of said support columns (2) are provided with support arrangements for a common, rotatable horizontal platform, and wherein driving means are allocated to said platform.

24. Photography system in accordance with claim 23, wherein said driving means are integrated in at least one of said support columns (2).

25. Photography system in accordance with claim 23, wherein said driving means exhibit transmission means that run between a drive unit and said support arrangements for said platform.

26. Photography system in accordance with claim 25, wherein said transmission means exhibit a traction mechanism drive.

27. Photography system in accordance with claim 23, wherein said basic frame is designed to be strong enough to bear a heavy load.

28. Photography system in accordance with claim 23, wherein an electrical or electronic controlling means is allocated to said drive means, and having transmission lines that are at least partially integrated in said basic frame.

29. Photography system in accordance with claim 23, further comprising bearing arrangements that are configured as precision units with said connection profiles (3) and said driving means, which permits use for trick and special-effect photographs as well as for scientific photography.

30. Photography system in accordance with claim 23, further comprising:
each of said support columns (2) being provided at their upper end faces with connection profiles (3), said connection profiles allowing for the detachable holding of at least one stationary or rotatable system component or system unit, and said support elements being attached to said connection profiles (3).

## Patentansprüche

1. Modulares Fotografiesystem umfassend ein Grundgestell (1) mit vier vertikalen Tragsäulen (2), die starr miteinander verbunden sind, **dadurch gekennzeichnet, dass** die Tragsäulen (2) jeweils an ihren oberen Stirnenden mit Verbindungsprofilierungen (3) versehen sind, um zusätzliche Systemkomponenten (4, 6, 8, 47, 52) aufzunehmen, die entsprechende Verbindungsprofilierungen aufweisen, worin die Verbindungsprofilierungen (3) der Tragsäulen (2) und die zusätzlichen Systemkomponenten (4, 6, 8, 47, 52) in der Art konfiguriert sind, dass die entsprechenden Verbindungsprofilierungen der Tragsäule (2) und der zusätzlichen Systemkomponente (4, 6, 8, 47, 52) koaxial zur Längsachse der entsprechenden Tragsäule(2) ineinander gesteckt werden, und dass mindestens ein erster Auslegerarm (4), der als eine zusätzliche Systemkomponente dient, lösbar mit einer der Verbindungsprofilierungen (3) verbunden ist, wobei der Auslegerarm im Wesentlichen radial zur Längsachse der zugehörigen Tragsäule (2) abragt.

2. Fotografiesystem nach Anspruch 1, worin der wenigstens eine Auslegerarm (4) auf der zugehörigen Verbindungsprofilierung (3) der Tragsäule (2) gelagert ist, so dass der Auslegerarm (4) um die Längsachse der Tragsäule (2) drehbeweglich ist.

3. Fotografiesystem nach Anspruch 1, worin die Verbindungsprofilierungen (3) der Tragsäulen (2) zumindest ungefähr in einer gemeinsamen horizontalen Ebene angeordnet sind.

4. Fotografiesystem nach Anspruch 1, worin der Auslegerarm (4) an seinem freien Ende eine den Verbindungsprofilierungen (3) der Tragsäulen (2) entsprechende Verbindungsprofilierung (3) aufweist, und die zur Halterung oder Lagerung weiterer Systemkomponenten oder -einheiten (6, 8) vorgesehen ist.

5. Fotografiesystem nach Anspruch 1, worin jeder Systemkomponente oder Systemeinheit (5, 6, 8, 28a, 28b) wenigstens eine zu den Verbindungsprofilierungen der Auslegerarme (4) korrespondierende Verbindungsprofilierung (3) zugeordnet ist.

6. Fotografiesystem nach Anspruch 1, worin ein Auslegerarm (4) mit jeder Tragsäule (2) verbunden ist, wodurch alle Auslegerarme in einer gemeinsamen horizontalen Ebene drehbeweglich gelagert sind.

7. Fotografiesystem nach Anspruch 1, ferner umfassend wenigstens einen Verlängerungsabschnitt, der eine Verbindungsprofilierung (3) auf wenigstens einem Stirnende aufweist, und wo der Verlängerungsabschnitt als Systemkomponente dient.

8. Fotografiesystem nach Anspruch 7, worin der wenigstens eine Verlängerungsabschnitt längenverstellbar ausgeführt ist.

9. Fotografiesystem nach Anspruch 4, ferner umfassend einen zusätzlichen Auslegerarm mit Verbindungsprofilierungen (3) an beiden Enden, wobei der zusätzliche Auslegerarm (4) drehbeweglich mit dem freien Ende des ersten Auslegerarms (4) verbunden ist, so dass das freie Ende des zusätzlichen Auslegerarms (4) in jeder gewünschten ebenen Position, statt in einer einfachen Bogenbewegung, eingestellt werden kann.

10. Fotografiesystem nach Anspruch 1 oder 9, ferner umfassend eine Trägervorrichtung, die an jede Verbindungsprofilierung (3) angebracht sein kann, um eine Systemkomponente zu tragen.

11. Fotografiesystem nach Anspruch 10, ferner umfassend wenigstens eine an der Trägervorrichtung angebrachte Tragplatte, wo die Tragplatte als Systemkomponente dient und insbesondere als eine Tisch-, Ablage- oder Fachplatte gestaltet ist.

12. Fotografiesystem nach Anspruch 10, ferner umfassend wenigstens eine bevorzugt vertikal ausgerichtete Schirmanordnung, die als Systemkomponente dient, und zumindest weitgehend formstabil ist, und die an der Trägervorrichtung angebracht ist.

13. Fotografiesystem nach Anspruch 12, worin die Schirmanordnung plattenförmig gestaltet ist.

14. Fotografiesystem nach Anspruch 12, worin die Schirmanordnung als dreidimensionales Flächengebilde gestaltet ist.

15. Fotografiesystem nach Anspruch 14, worin eine flexible Schirmanordnung, insbesondere in Form eines flexiblen Flächengebildes vorgesehen ist.

16. Fotografiesystem nach Anspruch 10, worin die Trägervorrichtung mit einer horizontal oder vertikal ausgerichteten Tragwelle für die Aufnahme eines auf- und abrollbaren flexiblen Flächengebildes versehen ist, und die an einer gestellfest positionierten Halterung drehbeweglich gelagert ist.

17. Fotografiesystem nach Anspruch 10, worin die Trägervorrichtung zwei gekrümmte, mit dem Grundgestell verbindbare Trägerabschnitte aufweist.

18. Fotografiesystem nach Anspruch 14, worin die Trägervorrichtung einen Schwenkrahmen zur Halterung einer plattenförmigen Schirmanordnung aufweist.

19. Fotografiesystem nach Anspruch 14, worin die Trägervorrichtung längenverstellbare horizontale oder vertikale Halteabschnitte aufweist.

20. Fotografiesystem nach Anspruch 1, ferner umfassend einen Zeltaufbau, der mit dem Grundgestell oder den Auslegerarmen (4) verbindbar ist.

21. Fotografiesystem nach Anspruch 20, worin Tragmittel für ein Zeltgebilde des Zeltaufbaus vorgesehen sind, wobei die Tragmittel entweder am Grundgestell oder den Auslegerarmen (4) mittels der Verbindungsprofilierungen (3) festgelegt sind.

22. Fotografiesystem nach Anspruch 21, worin als Tragmittel ein Tragring oder eine Tragschiene vorgesehen ist, der an vertikalen Haltearmen abgestützt ist und der ein zumindest teilweise zylindrisch aufhängbares Zeltgebilde trägt.

23. Fotografiesystem nach Anspruch 1, worin die Verbindungsprofilierungen (3) der Tragsäulen (2) mit Lagerungen für eine gemeinsame, drehbare horizontale Plattform versehen sind, und wobei der Plattform Antriebsmittel zugeordnet sind.

24. Fotografiesystem nach Anspruch 23, worin die Antriebsmittel in wenigstens einer der Tragsäulen (2) integriert sind.

25. Fotografiesystem nach Anspruch 23, worin die Antriebsmittel Übertragungsmittel aufweisen, die sich zwischen einer Antriebseinheit und den Lagerungen für die Plattform erstrecken.

26. Fotografiesystem nach Anspruch 25, worin die Übertragungsmittel einen Zugmitteltrieb aufweisen.

27. Fotografiesystem nach Anspruch 23, worin das Grundgestell für eine hohe Traglast stabil ausgeführt ist.

28. Fotografiesystem nach Anspruch 23, worin den Antriebsmitteln eine elektrische oder elektronische Steuerung zugeordnet ist, deren Übertragungsleitungen zumindest teilweise in dem Grundgestell integriert sind.

29. Fotografiesystem nach Anspruch 23, ferner umfassend Lagerungen, die als Präzisionseinheiten mit den Verbindungsprofilierungen (3) und den Antriebsmitteln gestaltet sind, die eine Anwendung für Trick- und Spezialeffektaufnahmen sowie für wissenschaftliche Fotografie ermöglichen.

30. Fotografiesystem nach Anspruch 23, ferner **gekennzeichnet dadurch, dass** jede der Tragsäulen (2) an ihren oberen Stirnenden mit Verbindungsprofilierungen (3) zur lösbaren Aufnahme von wenigstens einer stationären oder drehbeweglichen Systemkomponente oder Systemeinheit versehen ist, und die Tragelemente an den Verbindungsprofilierungen (3) angebracht sind.

## Revendications

1. Un système modulaire de photographie, comprenant un châssis de base (1) ayant quatre colonnes verticales de support (2), reliées rigidement les unes aux autres, **caractérisé en ce que** chacune des colonnes de support (2) est muni à ses faces d'extrémité supérieure de profilés de liaison (3) afin de recevoir des composants additionnels du système (4, 6, 8, 47, 52) ayant des profilés de liaison correspondant, dans lequel les profil de liaison (3) des colonnes de support (2) et les composants systèmes additionnels (4, 6, 8, 47, 52) sont configurés de manière que les profilés de liaison respectifs de la colonne de support (2) et le composant additionnel du système (4, 6, 8, 47, 52) soient insérés l'un dans l'autre, coaxialement à l'axe longitudinal de la colonne de support respective (2), et qu'au moins un premier bras d'extension (4), servant de composant additionnel du système, soit relié de façon détachable à l'un desdits profilés de liaison (3), ledit bras d'extension faisant saillie sensiblement radialement par rapport à l'axe longitudinal de ladite colonne de support associée (2).

2. Système photographique selon la revendication 1, dans lequel ledit bras d'extension (4), prévu en au moins un exemplaire, est supporté sur ledit profilé de liaison (3) associé de ladite colonne de support (2), de manière que ledit bras d'extension (4) puisse tourner autour d'un axe longitudinal de ladite colonne de support (2).

3. Système photographique selon la revendication 1, dans lequel tous les profilés de liaison (3) desdites colonnes de support (2) sont placés au moins approximativement dans un plan horizontal commun.

4. Système photographique selon la revendication 1, dans lequel un desdits bras d'extension (4) présente à son extrémité libre un profilé de liaison (3) correspondant à des profilés de liaison (3) desdites colonnes de support (2) et est utilisé pour tenir ou supporter des composants ou unités additionnelles du système (6, 8).

5. Système photographique selon la revendication 1, dans lequel chacun desdits composants du système ou des unités du système (5, 6, 8, 28a, 28b) est pourvu d'au moins un profilé de liaison (3) correspondant aux dits profilés de liaison desdits bras d'extension (4).

6. Système photographique selon la revendication 1, dans lequel un bras d'extension (4) est relié à chaque colonne de support (2), de manière que la totalité desdits bras d'extension soit supportée à rotation dans un plan horizontal commun.

7. Système photographique selon la revendication 1, comprenant en outre au moins une partie d'extension ayant un profilé de liaison (3) sur au moins une face d'extrémité, et dans lequel ladite partie d'extension sert de composant du système.

8. Système photographique selon la revendication 7, dans lequel ladite partie d'extension dont est prévu au moins un exemplaire, est réalisée de manière à être de longueur réglable.

9. Système photographique selon la revendication 6, comprenant en outre un bras d'extension additionnel comportant des profilés de liaison (3) sur les deux extrémités, ledit bras d'extension (4) additionnel étant relié à rotation sur ladite extrémité libre dudit premier bras d'extension (4), de manière que ladite extrémité libre dudit bras d'extension (4) additionnel puisse être réglée en toute position souhaitée dans le plan, plutôt que sur un simple déplacement en arc.

10. Système photographique selon la revendication 1 ou 9, comprenant en outre un dispositif transporteur pouvant être fixé à tout profilé de liaison (3) pour véhiculer un composant du système.

11. Système photographique selon la revendication 10, comprenant en outre au moins un panneau de support, fixé audit dispositif transporteur, dans lequel ledit panneau de support sert de composant du système, et est spécialement conçu sous forme de plaque de panneau de support ou de rayonnage.

12. Système photographique selon la revendication 10, comprenant en outre au moins un écran, de préférence aligné verticalement, servant de composant du système et au moins largement stable dimensionnellement, et qui est fixé audit dispositif transporteur.

13. Système photographique selon la revendication 12, dans lequel ledit écran est conformé en forme de panneau.

14. Système photographique selon la revendication 12, dans lequel ledit écran est configuré en un article de forme plate, tridimensionnelle.

15. Système photographique selon la revendication 14, dans lequel un écran flexible, spécifiquement sous la forme d'un article flexible de forme plate, est prévu.

16. Système photographique selon la revendication 10, dans lequel ledit dispositif transporteur est muni d'un arbre support aligné horizontalement ou verticalement, prévu pour maintenir un article flexible de forme plate, , pouvant être roulé et déroulé et qui est supporté à rotation sur un montage fixé en position sur ledit cadre.

17. Système photographique selon la revendication 10, dans lequel ledit dispositif transporteur présente deux segments support incurvés pouvant être reliés audit cadre de base.

18. Système photographique selon la revendication 14, dans lequel ledit dispositif transporteur présente un cadre pivotant pour supporter un écran analogue à un panneau.

19. Système photographique selon la revendication 14, dans lequel ledit dispositif transporteur présente des parties de support horizontales ou verticales réglables en longueur.

20. Système photographique selon la revendication 1, comprenant en outre un ensemble de tente pouvant être relié audit cadre de base ou aux dits bras d'extension (4).

21. Système photographique selon la revendication 20, dans lequel des moyens de support pour une formation de tente dudit ensemble de tente sont prévus, lesdits moyens de support étant fixés en place soit sur ledit cadre de base, soit sur lesdits bras d'extension (4), à l'aide desdits profil de liaison (3).

22. Système photographique selon la revendication 21, dans lequel lesdits moyens de support comprennent un anneau ou une piste de support, supporté sur des bras support verticaux, qui supporte une formation de tente susceptible d'être suspendue, et au moins partiellement cylindrique.

23. Système photographique selon la revendication 1, dans lequel lesdits profil de liaison (3) desdites colonnes de support (2) sont munis d'agencements de support pour une plate-forme commune, horizontale, susceptible de tourner, et dans lequel des moyens d'entraînement sont affectés à ladite plate-forme.

24. Système photographique selon la revendication 23, dans lequel lesdits moyens d'entraînement sont intégrés en au moins l'une desdites colonnes de support (2).

25. Système photographique selon la revendication 23, dans lequel lesdits moyens d'entraînement présentent des moyens de transmission qui se déplacent entre une unité d'entraînement et lesdits agencements de support pour ladite plate-forme.

26. Système photographique selon la revendication 25, dans lequel lesdits moyens de transmission présentent un dispositif d'entraînement à mécanisme de traction.

27. Système photographique selon la revendication 23, dans lequel ledit cadre de base est conçu pour être suffisamment résistant pour porter une charge lourde.

28. Système photographique selon la revendication 23, dans lequel des moyens de commande électrique ou électronique sont affectés aux dits moyens d'entraînement et comportent des lignes de transmission au moins partiellement intégrées dans ledit cadre de base.

29. Système photographique selon la revendication 23, comportant en outre des agencements de palier, configurés en unités de précision avec lesdits profil de liaison (3) et lesdits moyens d'entraînement, permettant un usage pour des photographies de trucages et d'effets spéciaux, ainsi que pour de la photographie scientifique.

30. Système photographique selon la revendication 23, dans lequel, en outre:
chacune desdites colonnes de support (2) est pourvue à ses faces d'extrémité supérieures de profil de liaison (3), lesdits profilés de liaison permettant de supporter de façon détachable au moins un composant du système ou unité du système fixe ou rotatif, et lesdits éléments supports étant fixés aux dits profilés de liaison (3).
